# FASCICULE DE BREVET EUROPEEN

(11) **EP 2 268 531 B1**
(45) Date de publication et mention de la délivrance du brevet: **09.05.2012**
(21) Numéro de dépôt: 09742306.5
(22) Date de dépôt: 10.04.2009
(51) Int. Cl.: B62D 25/12, B62D 27/06, B62D 65/08, B60H 1/28

(54) **GRILLE D'AUVENT EN MATIERE PLASTIQUE POUR VEHICULE POURVUE D'UNE PARTIE DEMONTABLE**
KUNSTSTOFFKÜHLERGRILL FÜR FAHRZEUGE MIT EINEM ABNEHMBAREN TEIL
PLASTIC SCUTTLE GRILLE FOR VEHICLE WITH DETACHABLE PART

(30) Priorité: 21.04.2008 FR 0802204
(43) Date de publication de la demande: 05.01.2011
(73) Titulaire: Renault s.a.s., 92100 Boulogne-Billancourt (FR)
(72) Inventeur: TARENBERGUE, Eric, F-91570 Bievres (FR); ESCALERE, Christophe, F-92130 Issy Les Moulineaux (FR); LE ROCH, Yannick, F-78610 Saint Leger En Yvelines (FR); BLANC, Christophe, F-36002 Chateauroux Cedex (FR)
(86) Numéro de dépôt international: PCT/FR2009/050656
(87) Numéro de publication internationale: WO 2009/136108

(56) Documents cités:
- EP-A- 0 099 115
- EP-A- 0 302 499
- FR-A- 2 710 009
- FR-A- 2 754 503
- US-B1- 6 213 541

## Description

L'invention concerne une grille d'auvent en matière plastique pour véhicule pourvue d'une partie démontable, voir par exemple FR-A-27/0009.

Un véhicule, en particulier un véhicule automobile, comprend aujourd'hui de plus en plus d'éléments en matières plastiques, généralement réalisés d'une pièce. Il est parfois nécessaire d'accéder aux pièces ou parties du véhicule situées derrière de tels éléments plastiques, ou à l'intérieur de celle-ci.

C'est le cas par exemple des grilles d'auvent qui sont situées le long du capot avant du véhicule, sous le pare-brise. Ces grilles sont réalisées en une pièce qui s'étend sur toute la largeur du véhicule, et comprennent des joints venant en appui sur le pare-brise. Dans certains véhicules, l'avancée du pare-brise peut être relativement importante, la grille d'auvent se trouvant alors très en avant du véhicule. De ce fait, il est difficile d'accéder aux pièces du véhicule situées sous l'avancée du pare-brise sans enlever la grille d'auvent. Un tel démontage est difficile et long, ce qui complique l'examen ou le changement des pièces auxquels il est nécessaire de pouvoir accéder.

L'invention vise à pallier ces inconvénients en proposant une grille d'auvent en matière plastique d'un véhicule, pourvue d'une partie démontable, cette dernière pouvant être positionnée et ôtée de manière simple, permettant un accès simple et rapide à des pièces situées derrière la grille.

A cet effet, l'objet de l'invention concerne une grille d'auvent selon la revendication 1. Elle comporte au moins une partie fixe destinée à être fixée rigidement au véhicule, et au moins une partie amovible pourvue d'au moins un moyen de fixation réversible apte à coopérer avec un moyen de fixation correspondant de la partie fixe de la grille afin de permettre la fixation ou le démontage de ladite partie amovible sur au moins une partie fixe de la grille.

Le montage ou le démontage de la partie amovible peut ainsi être réalisé de manière très simple et rapide.

Avantageusement, au moins une partie du pourtour de la partie amovible est pourvue d'un joint d'étanchéité.

Avantageusement, le ou les moyens de fixation sont conçus de manière à pouvoir être manoeuvrés à la main. Aucun outil n'est ainsi nécessaire, ce qui permet de faciliter le montage / démontage de la partie amovible.

Selon l'invention, le ou les moyens de fixation sont des clips.

Chaque clip est par exemple formé d'une languette repliée en V dont l'extrémité libre fait saillie de la partie amovible du côté opposé de la grille d'auvent. Le clip peut ainsi être facilement déclipsé en saisissant cette extrémité libre et en refermant le V du clip.

La grille d'auvent est réalisée en trois parties distinctes : deux parties d'extrémité destinées à être fixées définitivement au véhicule, reliées par une partie centrale amovible qui vient se fixer de manière réversible sur chacune des parties d'extrémité.

L'invention est maintenant décrite en référence aux dessins annexés, non limitatifs, dans lesquels :
- la figure 1 représente une vue d'une partie avant d'un véhicule automobile, et représente plus particulièrement une grille d'auvent en matière plastique selon la présente invention, et la partie inférieure du pare-brise ;
- la figure 2 est une vue identique à la figure 1, la partie centrale amovible de la grille d'auvent étant ôtée,
- la figure 3 représente une vue de détail d'un moyen de fixation de la partie centrale amovible représentée sur les figures 1 et 2.

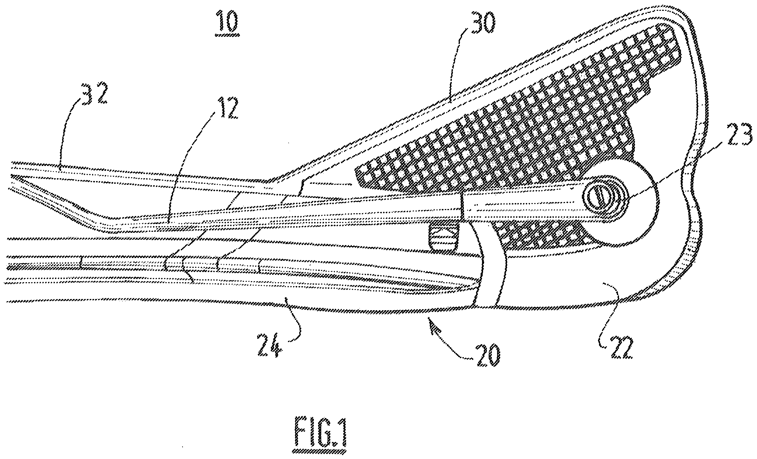

La figure 1 représente partiellement la partie inférieure d'un pare brise 10, un essuie glace 12 et une grille d'auvent 20 de l'avant d'un véhicule automobile.

Selon l'invention, la grille d'auvent 20 comporte au moins une partie fixe destinée à être fixée rigidement au véhicule, et au moins une partie amovible pourvue d'au moins un moyen de fixation réversible apte à coopérer avec un moyen de fixation correspondant de la partie fixe de la grille afin de permettre la fixation ou le démontage de ladite partie amovible sur au moins une partie fixe de la grille.

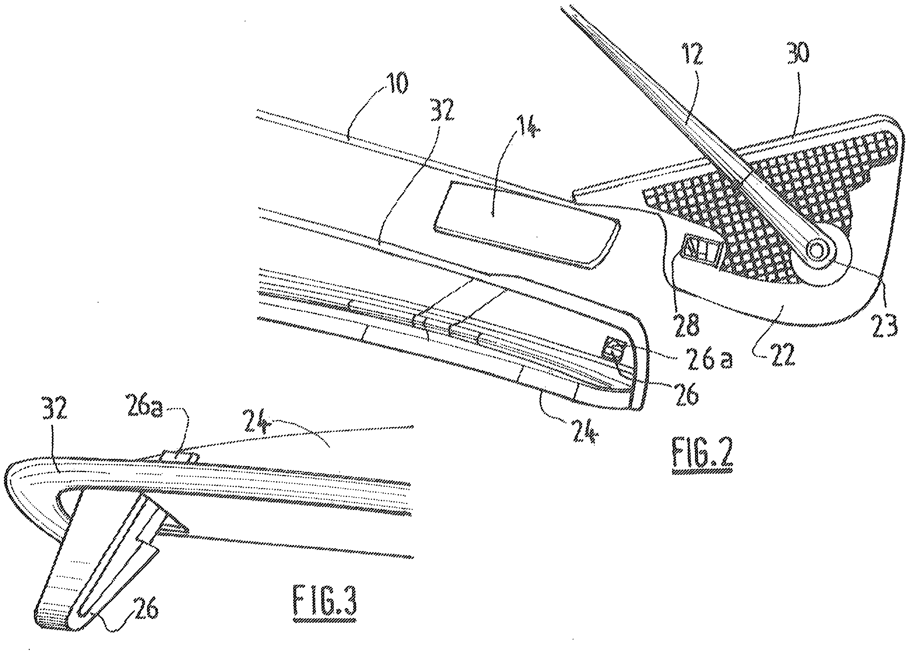

Dans l'exemple représenté, la grille d'auvent 20 comporte deux parties fixes d'extrémité 22 et une partie amovible 24 centrale. Pour des raisons de clarté, seule l'une des parties fixes d'extrémité 22 est représentée sur les figures 1 et 2.

Les deux parties fixes d'extrémité 22 sont destinées à être montées de manière définitive sur le véhicule, de part et d'autre du pare-brise. Dans l'exemple, ces parties fixes d'extrémités sont grillagées et sont chacune pourvues d'un orifice 23 permettant le passage de l'axe d'entraînement de l'essuie-glace 12.

Ces deux parties fixes d'extrémité 22 sont distinctes et sont reliées entre elles par la partie amovible centrale 24.

Cette partie amovible centrale 24 est pourvue de deux moyens de fixation réversible 26 aptes à coopérer avec des moyens de fixation correspondants de la grille en matière plastique afin de permettre la fixation ou le démontage de ladite partie sur la grille.

Ces moyens de fixation sont de préférence conçus de manière à pouvoir être manoeuvrés à la main, de sorte que le montage, comme le démontage, peut être réalisé par une personne non qualifiée, sans aide d'outils. Dans l'exemple, ces moyens de fixation réversible 26 sont des clips. Tout autre moyen de fixation démontable peut toutefois être envisagé, tel qu'un système de rivets démontables en matière plastique.

Dans l'exemple, la partie centrale amovible présente une forme allongée et est pourvue de deux clips 26 (dont un seul est représenté sur les figures), situés chacun à une extrémité de manière à coopérer chacun avec un orifice 28 réalisé dans chaque partie fixe d'extrémité 22.

Chaque clip 26 est formé d'une languette repliée en V dont l'extrémité libre 26a fait saillie de la partie amovible du côté opposé de la grille d'auvent, tel que visible sur la figure 3. La partie en V de la languette est ainsi située d'un côté de la grille, l'extrémité libre 26a étant située de l'autre côté de la grille. Cette extrémité libre 26a peut ainsi être saisie depuis le dessus de la grille et tirée vers l'aile du V solidaire de la partie amovible 24, de manière à dégager le clip de l'orifice 28 avec lequel il est en prise. Il suffit alors de soulever la partie amovible centrale pour avoir accès à des pièces situées sous la grille d'auvent, telles que par exemple le filtre moteur 14 du véhicule.

Par ailleurs, afin d'assurer l'étanchéité de la grille d'auvent le long du pare-brise sur toute la largeur de ce dernier, le bord de la partie de la grille d'auvent est pourvu d'un joint d'étanchéité sur toute sa longueur en contact avec le pare-brise. Ce joint est situé en partie sur les parties fixes (référence 30), et en partie sur la partie centrale amovible (référence 32). Le joint 32 de la partie centrale amovible s'étend également le long des bords de la partie centrale venant en appui sur les parties fixes d'extrémité 22, la partie centrale recouvrant partiellement chacune des parties d'extrémités de manière à obturer complètement l'espace entre chaque partie d'extrémité et la partie centrale amovible.

## Revendications

1. Grille d'auvent en matière plastique d'un véhicule comportant au moins une partie fixe (22) destinée à être fixée rigidement au véhicule, et au moins une partie amovible (24) pourvue d'au moins un moyen de fixation (26) réversible apte à coopérer avec un moyen de fixation correspondant de la partie fixe de la grille en matière plastique afin de permettre la fixation ou le démontage de ladite partie amovible sur au moins une partie fixe de la grille, **caractérisée en ce qu'**elle est réalisée en trois parties distinctes : deux parties d'extrémité (22) destinées à être fixées définitivement au véhicule reliées entre elles par une partie centrale amovible (24) et **caractérisée en ce que** le ou les moyens de fixation sont des clips.

2. Grille d'auvent en matière plastique selon la revendication 1, **caractérisée en ce que** chaque clip est formé d'une languette repliée en V dont l'extrémité libre (26a) fait saillie de la partie amovible du côté opposé de la grille d'auvent.

## Claims

1. Plastic scuttle grille of a vehicle, comprising at least one fixed part (22) designed to be rigidly fixed to the vehicle, and at least one removable part (24) provided with at least one reversible fastening means (26) capable of interacting with a corresponding fastening means of the fixed part of the plastic grille in order to allow the fastening or removal of said removable part onto or from at least one fixed part of the grille, **characterized in that** it is made in three distinct parts: two end parts (22) designed to be permanently fixed to the vehicle, which parts are connected together by a removable central part (24) and **in that** the fastening means (26) are clips.

2. Plastic scuttle grille according to claim 1, **characterized in that** each clip is formed of a tongue bent in a V shape of which the free end (26a) protrudes from the removable part on the opposite side of the scuttle grille.

## Patentansprüche

1. Kunststoffwindlaufgitter eines Fahrzeugs mit mindestens einem festgelegten Teil (22), der dazu bestimmt ist, starr am Fahrzeug befestigt zu werden, und mindestens einem entfernbaren Teil (24), der mit mindestens einem reversiblen Befestigungsmittel (26) versehen ist, das geeignet ist, mit einem entsprechenden Befestigungsmittel des festgelegten Teils des Kunststoffgitters zusammenzuwirken, um die Befestigung oder den Abbau des entfernbaren Teils an bzw. von mindestens einem festgelegten Teil des Gitters zu gestatten, **dadurch gekennzeichnet, dass** es aus drei einzelnen Teilen hergestellt ist: zwei Endteilen (22), die dazu bestimmt sind, definitiv am Fahrzeug befestigt zu werden, und durch einen entfernbaren mittleren Teil (24) miteinander verbunden sind und dass das oder die Befestigungsmittel Klammern sind.

2. Kunststoffwindlaufgitter nach Anspruch 1, **dadurch gekennzeichnet, dass** jede Klammer aus einer V-förmig umgebogenen Lasche gebildet ist, deren freies Ende (26a) vom entfernbaren Teil von der gegenüberliegenden Seite des Windlaufgitters vorragt.
